# EUROPÄISCHE PATENTSCHRIFT

(11) **EP 1 228 649 B1**
(45) Veröffentlichungstag und Bekanntmachung des Hinweises auf die Patenterteilung: **17.08.2005**
(21) Anmeldenummer: 00987103.9
(22) Anmeldetag: 09.11.2000
(51) Int. Cl.: H04Q 3/00

(54) **VERFAHREN ZUR ÜBERMITTLUNG VON DIENSTRELEVANTEN INFORMATIONEN ZWISCHEN MEHREREN VERBINDUNGS-STEUERUNGEN**
METHOD FOR TRANSMITTING SERVICE-RELEVANT INFORMATION BETWEEN SEVERAL END-TO-END CONTROLLERS
PROCEDE POUR TRANSMETTRE DES INFORMATIONS RELATIVES A DES SERVICES ENTRE PLUSIEURS SYSTEMES DE COMMANDE D'APPELS

(30) Priorität: 12.11.1999 DE 19954566
(43) Veröffentlichungstag der Anmeldung: 07.08.2002
(73) Patentinhaber: SIEMENS AKTIENGESELLSCHAFT, 80333 München (DE)
(72) Erfinder: GREWING, Thomas, 12167 Berlin (DE); HENKEL, Mirko, 13509 Berlin (DE); HINKELMANN, Jochen, 13158 Berlin (DE); WAGNER, Holm, 14641 Falkenrehde (DE)
(86) Internationale Anmeldenummer: PCT/DE2000/003922
(87) Internationale Veröffentlichungsnummer: WO 2001/037582

(56) Entgegenhaltungen:
- EP-A- 0 886 446
- EP-A- 0 926 906

## Beschreibung

In einem als Telephonnetz ausgebildeten verbindungsorientierten Kommunikationsnetz bestehen zu jedem Zeitpunkt meist eine Vielzahl von Verbindungen, die vorwiegend zur Realisierung der angebotenen Dienste eingerichtet werden. Eine geregelte Nutzung der Dienste - die Nutzung wird auch als Gespräch oder Ruf bezeichnet - erfolgt meist durch zusätzliche Steuer-Mechanismen. Diese sind je nach Art des Dienstes unterschiedlich ausgebildet. Sie könnten als zentrale Steuerung, als dezentrale Steuerung oder als Verbund von Steuerungen realisiert sein.

Der Standard-Dienst eines Telephonnetzes - ein Gespräch bzw. Ruf zwischen zwei Teilnehmern - wird meist mit einer Verbindung realisiert. Die Steuerung dieses Dienstes ist üblicherweise als verteilte Steuerung ausgebildet, d.h. sie wird von Steuerungs-Instanzen durchgeführt, die auf die VermittlungsEinrichtungen des Kommunikationsnetzes verteilt sind. Diese Steuerung wird in der Fachwelt auch als Call Processing bezeichnet. Von dem Call Processing werden die für die Verbindung vorgesehenen Aktionen (z.B. Verbindungsaufbau und -abbau) und ggf. auch die Umsetzung der Protokoll von Zusatz-Diensten (z.B. Anzeige der Rufnummern) durchgeführt. Hierzu wird u.a. auch ein Austausch von Parametern zwischen den Steuerungs-Instanzen durchgeführt, wobei Zeitpunkt des Austausches und Art der Parameter in für die jeweiligen Aktionen und Dienste festgelegten Protokollen beschrieben sind. Dieser Austausch ist hierbei lediglich zwischen denjenigen Steuerungs-Instanzen vorgesehen, die derselben Verbindung zugeordnet sind.

Für komplexe Dienste, wie z.B. Konferenzen zwischen mehreren Teilnehmern, sind häufig entsprechend erweiterte SteuerungsMechanismen erforderlich. Ein Modell zur Realisierung dieser zusätzlichen Mechanismen besteht in der Erweiterung der Telephonnetze zu sog. Intelligenten Netzen (IN). Hierbei werden die Vermittlungseinrichtungen - nun auch Service Switching Point (SSP) genannt - um zumindest einen Service Control Point (SCP) ergänzt, von dem zumindest die über die bereits vorgesehenen Standard-Dienste der Vermittlungseinrichtungen hinausgehenden Anteile der komplexen Dienste gesteuert werden. Somit handelt es sich bei diesem Modell um einen Verbund von Steuerungen. Eine Steuerung entsprechend diesem Modell wird in der Fachwelt auch als Call Party Handling (CPH) bezeichnet. Im Rahmen dieses Modell werden je nach Art des zu steuernden Dienstes unterschiedliche dienstspezifische Steuerungen realisiert.

Eine dienstspezifische Steuerung ist in dem internationalen ITU-Standard Q.1224, "Distributed Functional Plane for Intelligent Network Capability Set 2", 09/97 beschrieben und wird als Connection View Model bezeichnet. Dabei wird von einem Dienst ausgegangen, der zumindest zeitweise durch zwei voneinander getrennte Teilverbindungen - auch Call Segmente genannt - realisiert wird. Diese Teilverbindungen werden hierbei üblicherweise als Standard-Dienste realisiert und folglich von voneinander vollständig getrennten Steuerungen - d.h. jede Teilverbinduung von einem ihr zugeordneten Call Processing - gesteuert. Ein derartiges, einer Teilverbindung zugeordnetes Call Processing sei im weiteren als 'Call Segment Processing' bzw. als 'Call Segment Steuerung' bezeichnet.

Dieses Modell ermöglicht zudem:
1. das Zusammenschalten und Trennen von mehreren Verbindungen - im folgenden ggf. auch 'Teilverbindungen' genannt - zu einer einheitlichen Gesamtverbindung oder 'Ruf' genannt,
2. das Anlegen von Ansagen und Tönen während des Aufbaus und/oder des Bestehens der Verbindungen und
3. den Aufbau von Verbindungen, die von dem Service Control Point (SCP) initiiert werden.

Das Connection View Model sei im weiteren am Beispiel des Dienstes Secure Answer erläutert. Bei diesem Dienst wird während des Aufbaus eines Rufs dem rufenden Teilnehmer eine Ansage übermittelt, dass augenblicklich von dem angerufenen Teilnehmer eine Identifikation zu dessen Authentifizierung eingegeben wird. Nach erfolgreicher Authentifizierung werden die Teilverbindungen zusammengeschaltet. Der Ruf erscheint für die Teilnehmer als Einheit, obwohl er zumindest zeitweise durch mehreren separate Call Segment Steuerungen gesteuert wird, da während des Aufbaus des Rufs bereits folgende zwei Teilverbindungen eingerichtet werden:
1. zwischen dem rufenden Teilnehmer und der die Ansage übermittelnden Instanz, die von einer ersten Call Segment Steuerung gesteuert wird, und
2. zwischen dem angerufenen Teilnehmer und der die Authentifizierung durchführenden Instanz, der eine zweite Call Segment Steuerung zugeordnet ist

Die Koordination der beteiligen Call Segment Steuerungen erfolgt gemäß diesem Model üblicherweise von einer in dem SCP vorgesehenen Koordinationsfunktion.

Wird ein Ruf jedoch zunächst mit zwei Call Segmenten aufgebaut und dann zusammen geschaltet, können bei diesem Lösungs-Ansatz viele der Zusatz-Dienste nicht genutzt werden, da die Übermittlung von Parametern zwischen unterschiedlichen Verbindungen zugeordneten Verbindungs-Steuerungen nicht vorgesehen ist. Im folgenden Tabelle enthält eine Auswahl von betroffenen Diensten und nennt jeweils hierfür ursächliche Parameter.

| Dienst | Erforderliche Parameter |
|---|---|
| - A-Rufnummer-Anzeige | - Calling Party Number |
| - Calling Line Identification (CLIP) | |
| - Malicious Call Identification (MCID) | |
| - B-Rufnummer-Anzeige | - Connected Line Identity |
| - Connected Line Identification Presentation (COLP) | Request Indicator - Connected Number |
| - Rufumleitungsinformation | - Redirecting Number |
| - Call Forwarding (CF) | - Original Called Party Number |
| | - Redirection Information |
| - Geschlossene Benutzergruppe | - Closed User Group Indica- |
| - Closed User Group (CUG) | tor |
| - Halten | - Hold |
| - Call Hold (HOLD) | - Retrieve |
| - Umstecken am Bus | - Suspend |
| - Terminal Portability (TP) | - Resume |
| - Generische Dienste | - Generic Notifications |
| - Anklopfen | - User-to-User Information (UUI) |
| - Call Waiting (CW) | |
| - User-to-User Signalling (UUS) | - CCBS possible indicator |
| - Completion of calls to busy subscriber (CCBS) | - CCNR possible indicator |
| - Completion of calls on no reply (CCNR) | |
| - Konferenzen (*) | - Backward Conference Treatment Indicator |

| | |
|---|---|
| (*) Die Informationen zum Behandeln von Konferenzen werden bei entsprechend konfiguriertem Intelligenten Netz ggf. von weiteren SCPs empfangen. | |

In dem internationalen ITU-Standard Q.1228, "Interface Recommendation for intelligent network Capability Set 2", 09/97 ist ein Intelligent Network Application Protocol (INAP) beschrieben, mit dessen Hilfe einige der genannten Parameter zwischen den Call Segment Steuerungen transferiert werden können. Der Transfer der Parameter zwischen den Call Segment Steuerungen wird hierbei immer über den SCP durchgeführt und ist für folgende Dienste bzw. Parameter vorgesehen:

| Dienst | Erforderliche Parameter |
|---|---|
| - A-Rufnummer-Anzeige | - Calling Party Number |
| - Calling Line Identification (CLIP) | |
| - Malicious Call Identification (MCID) | |
| - Rufumleitungsinformation | - Redirecting Number |
| - Call Forwarding (CF) | - Original Called Party Number |
| | - Redirection Information |

Der Transfer von Parametern ist hierbei im INAP für jeden Parameter separat festgelegt. Somit ist für jeden zusätzlichen Parameter, der im Telephonnetz eingeführt wird, eine Anpassung des INAP erforderlich, sofern eine Austausch des Parameters zwischen Call Segment Steuerungen angestrebt wird. Für die folgenden Dienste ist zur Zeit keine Unterstützung im INAP vorgesehen, d.h. die Parameter können in mindestens eine Richtung nicht transferiert und die zugehörigen Dienste somit nicht genutzt werden:

| Dienst | Erforderliche Parameter |
|---|---|
| - B-Rufnummer-Anzeige | - Connected Line Identity Request Indicator |
| - Connected Line Identification Presentation (COLP) | - Connected Number |
| - Geschlossene Benutzergruppe | - Closed User Group Indicator |
| - Closed User Group (CUG) | |
| - Halten | - Hold |
| - Call Hold (HOLD) | - Retrieve |
| - Umstecken am Bus | - Suspend |
| - Terminal Portability (TP) | - Resume |
| - Generische Dienste | - Generic Notifications |
| - Anklopfen | - User-to-User Information |
| - Call Waiting (CW) | (UUI) |
| - User-to-User Signalling (UUS) | - CCBS possible indicator |
| - Completion of calls to busy subscriber (CCBS) | - CCNR possible indicator |
| - Completion of calls on no reply (CCNR) | |
| - Konferenzen | - Backward Conference Treatment Indicator |

Der Erfindung liegt die Aufgabe zugrunde, das Verfahren zum Übermitteln von Parametern zwischen Verbindungs-Steuerungen zu verbessern und ein Erzeugnis umfassend Mittel zur Durchführung des Verfahrens zu realisieren. Die Aufgabe wird durch die Merkmale der Patentansprüchen 1 und 10 gelöst.

Der wesentliche Aspekt der Erfindung besteht in einem Verfahren zur Übermittlung von dienstrelevanten Informationen zwischen zumindest zwei unterschiedlichen Verbindungs-Steuerungen, bei dem die dienstrelevanten Informationen direkt zwischen den Verbindungs-Steuerungen übermittelt werden. Einige wesentliche Vorteile der Erfindung seien nachfolgend genannt:
- Ungewollte Einschränkungen im gewohnten Dienstspektrum des Teilnehmers werden vermieden;
- Die Dienste Geschlossene Benutzergruppe, B-Rufnummer-Anzeige, Hinweise für Halten und Umstecken am Bus sowie die generischen Dienste werden auch bei Nutzung von komplexen, durch den SCP realisierten Diensten unterstützt;
- Aufwendige Analysen, Implementierungen und Anpassungen des INAP für jeden neuen Dienst entfallen;
- Für die Dienste A-Rufnummer-Anzeige und Rufumleitungsinformation müssen wegen des erfindungsgemäßen, generischen SSP internen Parameter-Transfers von IN Dienstentwicklern nur noch gewünschte Einschränkungen der vollen Dienstunterstützung implementiert werden.

Gemäß einer Weiterbildung des erfindungsgemäßen Verfahrens ist vorgesehen, dass zumindest Teile der dienstrelevanten Informationen vor der Übermittlung an eine empfangende Verbindungs-Steuerung in einer sendenden Verbindungs-Steuerung zwischengespeichert werden - Anspruch 2. Somit kann der Zeitpunkt der Übermittlung flexibel gesteuert werden. Sie erfolgt z.B. nach dem Zusammenschalten der Call Segmente.

Entsprechend einer Ausgestaltung des erfindungsgemäßen Verfahrens werden die zwischengespeicherten dienstrelevanten Informationen beim Eintreffen einer weiteren dienstrelevanten Information semantisch geprüft und gegebenenfalls gelöscht - Anspruch 3. Insbesondere werden diejenigen zwischengespeicherten dienstrelevanten Informationen gelöscht, die zu der weiteren dienstrelevanten Information im Widerspruch stehen und/oder durch diese bedeutungslos werden - Anspruch 4. Hierdurch wird der Umfang der zu übermittelnden Informationen und der Bearbeitung in der empfangenden Verbindungs-Steuerung minimiert und eine semantisch korrekte Information der Telephondienst-Teilnehmer gewährleistet. Beispielsweise wird eine zwischengespeicherte Information HOLD bei Empfang einer Information RETRIEVE gelöscht, da der Teilnehmer nicht mehr gehalten wird, d.h. die Übermittlung und Bearbeitung der beiden Informationen ist nicht mehr erforderlich.

Nach einer Weiterbildung des erfindungsgemäßen Verfahrens werden in der sendenden Verbindungs-Steuerung die dienstrelevanten Informationen zumindest bis zur Erzeugung der empfangenden Verbindungs-Steuerung zwischengespeichert - Anspruch 5. Somit wird bei derartigen zeitlichen Verzögerungen ein Informationsverlust vermieden. Beispielsweise wird die Rufnummer eines mit einer ersten Verbindung einen Dienst Secure Answer initiierenden ersten Teilnehmers zwischengespeichert, während vom SCP der Aufbau einer zweiten Verbindung zum gerufenen zweiten Teilnehmer veranlasst wird. Dem zweiten Teilnehmer wird hierbei nach erfindungsgemäßer Übermittlung der zwischengespeicherten Informationen die Rufnummer des ersten Teilnehmers angezeigt.

Gemäß einer Variante des erfindungsgemäßen Verfahrens werden von der sendenden Verbindungs-Steuerung die dienstrelevanten Informationen spätestens nach Durchführung eines Dienstes übermittelt, der mit Hilfe der der empfangenden Verbindungs-Steuerung zugeordneten Verbindung bewirkt werden soll - Anspruch 6. Somit wird im vorigen Beispiel dem ersten Teilnehmer erst dann die Rufnummer des zweiten Teilnehmers angezeigt, wenn dessen Identität sichergestellt ist.

Entsprechend einer Ausgestaltung des erfindungsgemäßen Verfahrens ist vorgesehen, dass bei Koordination der Verbindungs-Steuerungen durch zumindest eine in einem übergeordneten Service Control Point realisierten Koordinationsfunktion von dieser die übermittelten dienstrelevanten Informationen jederzeit verändert werden können - Anspruch 7. Somit bleibt bei entsprechender Umsetzung des erfindungsgemäßen Verfahrens die bisherige Semantik von SCP Protokollen, z.B. den INAP, unberührt - d.h. SCP und das erfindungsgemäße Verfahren sind ohne Einschränkungen kompatibel.

Nach einer Weiterbildung des erfindungsgemäßen Verfahrens erfolgt die Übermittlung der dienstrelevanten Informationen zwischen den Verbindungs-Steuerungen jeweils innerhalb einer Vermittlungseinrichtung - Anspruch 8. Somit kann die Übermittlung besonders effektiv, z.B. durch Übermittlung eines Pointers auf die gespeicherten Informationen, bewirkt werden. Hieran ist von besonderem Vorteil, dass ein zeit- und resourcenaufwendiges Kopieren der Informationen vermieden wird.

Weitere vorteilhafte Ausgestaltungen des erfindungsgemäßen Verfahrens ergeben sich aus den Unteransprüchen, vorteilhafte Anordnungen zur Durchführung des erfindungsgemäßen Verfahrens aus den nebengeordneten Ansprüchen.

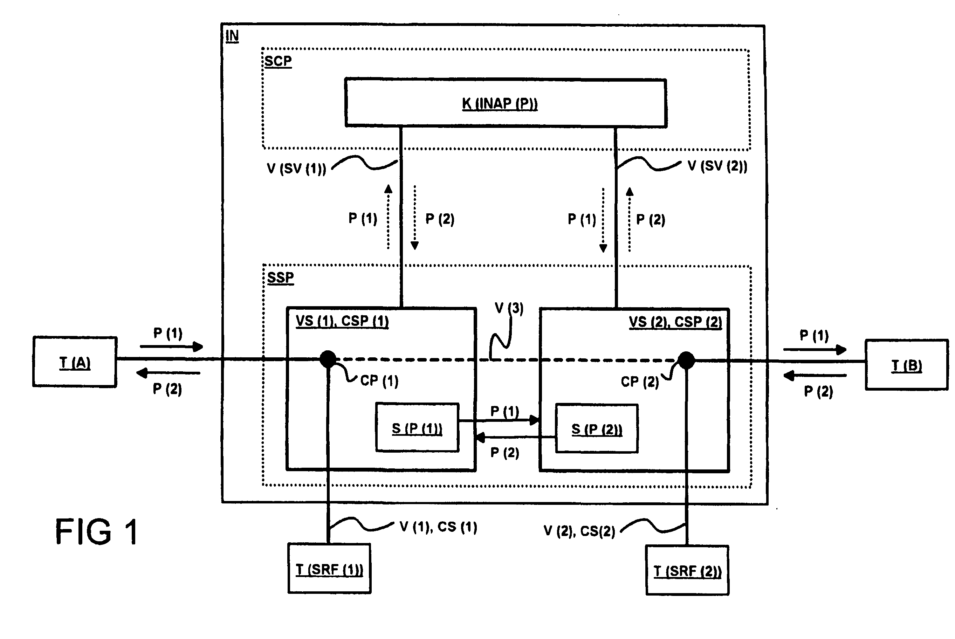

Das erfindungsgemäße Verfahren und die erfindungsgemäße Anordnung wird im folgenden anhand von einer Figur näher erläutert, in der beispielhaft ein erfindungsgemäßes Kommunikationssystem in einem Blockschaltbild dargestellt ist. Hierbei ist das Kommunikationssystem beispielhaft als Intelligenten Netz IN ausgebildet mit einem Service Control Point SCP und einem Service Switching Point SSP - auch Vermittlungseinrichtung SSP genannt. Mit dem Service Switching Point SSP sind mehrere Teilnehmer T verbunden, die als rufender Teilnehmer A, als gerufener Teilnehmer B, als erste Special Resource Function SRF (1) und als zweite Special Resource Function SRF (2) ausgebildet sind. Zwischen dem rufenden Teilnehmer A und der ersten Special Resource Function SRF (1) besteht zumindest zeitweise eine erste Verbindung V (1) - auch erstes Call Segment CS (1) genannt -, der in dem Service Switching Point SSP eine erste Verbindungs-Steuerung VS (1) - auch erste Call Segment Steuerung CSP (1) genannt - zugeordnet ist, wobei die erste Verbindung V (1) von dieser in einem ersten Connection Point CP (1) vermittelt wird. Zudem besteht zwischen dem gerufenen Teilnehmer B und der zweiten Special Resource Function SRF (2) zumindest zeitweise eine zweite Verbindung V (2) - auch zweites Call Segment CS (2) genannt -, der in dem Service Switching Point SSP eine zweite Verbindungs-Steuerung VS (2) - auch zweite Call Segment Steuerung CSP (2) genannt - zugeordnet ist, wobei die zweite Verbindung V (2) von dieser in einem zweiten Connection Point CP (2) vermittelt wird. Durch Zusammenschaltung der beiden Call Segmente CS kann eine dritte Verbindung V (3) eingerichtet werden, durch die der rufende Teilnehmer A mit dem gerufenen Teilnehmer B verbunden wird - die Zusammenschaltung wird in der Figur durch eine teilweise gestrichelte Darstellung der Verbindung V (3) angedeutet. Die Zusammenschaltung zu der Verbindung V (3) erfolgt beispielsweise durch eine Verschmelzung der beiden Call Segmente CS (1), CS (2) oder durch eine Verbindung der beiden Connection Point CP (1), CP (2) unter Beibehaltung der beiden Call Segmente CS (1), CS (2).

Die beiden Call Segment Steuerungen CSP werden von dem Service Control Point SCP koordiniert. Hierzu ist in diesem zumindest eine Koordinationsfunktion K vorgesehen, die beispielsweise gemäß dem Intelligent Network Application Protocoll INAP ausgebildet ist. Die Koordinationsfunktion K und die Call Segment Steuerungen CSP sind durch Verbindungen V miteinander verbunden, wobei die Verbindung V zwischen der ersten Call Segment Steuerung CSP (1) und der Koordinationsfunktion K beispielsweise als erste Signalisierungs-Verbindung SV (1) und zwischen der zweiten Call Segment Steuerung CSP (2) und der Koordinationsfunktion K als zweite Signalisierungs-Verbindung SV (2) ausgebildet ist.

Auf allen Verbindungen V werden neben Anderem dienstrelevante Informationen P übermittelt. Diese werden im vorliegenden Ausführungsbeispiel auch als Parameter P bezeichnet, sind jedoch nicht auf diesen Begriff beschränkt, d.h. jede äquivalente Repräsentation der dienstrelevanten Informationen P ist vorgesehen. Im vorliegenden Beispiel werden von dem rufenden Teilnehmer A erste Parameter P (1) und von dem gerufenen Teilnehmer B zweite Parameter P (2) gesendet. Ein Austausch einiger dieser Parameter P zwischen den Call Segmenten CS wird bei einer zeitgemäßen, entsprechend dem eingangs beschriebenen Stand der Technik realisierten Steuerungs-Verbund durch die Koordinationsfunktion K bewirkt. Diese Option ist durch gestrichelte Pfeile zwischen den Call Segmenten CS und der Koordinationsfunktion K angedeutet. Erfindungsgemäß erfolgt ggf. ein Austausch der Parameter P direkt zwischen den Call Segment Steuerungen CSP. Optional sind in den Call Segment Steuerungen CSP z.B. als Speicher S ausgebildete Speichermittel vorgesehen, in denen die Parameter P zumindest zeitweise zwischengespeichert werden.

Die angedeutete nicht verteilte Realisierung der Verbindungs-Steuerungen VS in einem einzigen Service Switching Point SSP sowie der Koordinationsfunktion K zu einem einzigen Service Control Point SCP stellen lediglich eine besonders vorteilhafte Variante dar. Grundsätzlich sind beliebige andere Realisierungen möglich wie z.B. ein verteilte Realisierung der Verbindungs-Steuerungen VS in unterschiedlichen Service Switching Points SSP. Diese Flexibilität wird in der Figur durch eine gepunktete Darstellung des Service Switching Point SSP und des Service Control Point SCP angedeutet.

Für das Ausführungsbeispiel sei die Erfindung am Beispiel des in Intelligenten Netzen IN vorgesehenen Dienstes 'Secure Answer' dargestellt. Bei diesem Dienst wird die Identität des angerufenen Teilnehmers vor dem Gespräch überprüft, um z.B. an einem jedem zugänglichen Apparat Gespräche nur einer bestimmten Person zuzustellen. Dabei wird der rufende Teilnehmer A zunächst durch das erste Call Segment CS (1) mit der z.B. als Ansage ausgebildeten ersten Specific Resource Function SRF (1) verbunden, während der zweite Teilnehmer B mit Hilfe des auf Anweisung der Koordinationsfunktion K erzeugten zweiten Call Segments CS (2) angerufen wird. Sobald sich der zweite Teilnehmer B identifiziert hat, werden die beide Call Segmente CS (1), CS (2) zusammengeschaltet.

Hierbei werden in der ersten Call Segment Steuerung CSP (1) vom ersten Teilnehmer A empfangene erste Parameter P (1) zumindest bis zur Erzeugung der zweiten Call Segment Steuerung CSP (2) zwischengespeichert. Diese ersten Parameter P (1) sind beispielsweise als Calling party number, Redirecting number, Original called party number, Redirection information, Closed User Group call indicator, Connected line identity request indicator oder als Additional calling party number ausgebildet.

Nachdem die zweite Call Segment Steuerung CSP (2) erzeugt ist, werden die in der ersten Call Segment Steuerung CSP (1) gespeicherten Parameter direkt an die zweite Call Segment Steuerung CSP (2) übermittelt und für den Aufbau des zweiten Call Segments CS (2) eingesetzt. Dabei verbleiben der Koordinationsfunktion K alle in dem internationalen ITU-Standard Q.1600 "Signalling system No. 7 - Interaction between ISUP and INAP", 09/1997 beschriebenen Möglichkeiten, die erfindungsgemäß übermittelten Parameter P zu verändern.

Im Anschluß an den Aufbau des zweiten Call Segments CS (2) erfolgt gemäß dem Dienst Secure Answer eine Authentifizierung des zweiten Teilnehmers B. Hierzu ist beispielsweise die zweite Specific Resource Function SRF (2) als Authentication Function ausgebildet. Die während dieser Zeitspanne im zweiten Call Segment CS (2) vom zweiten Teilnehmer B empfangenen zweiten Parameter P (2) werden von der zweiten Call Segment Steuerung CSP (2) solange zwischengespeichert, bis der mit der Verbindung V (2) bezweckte Dienst Secure Answer, d.h. die Authentifizierung des zweiten Teilnehmers B, bewirkt ist. Die zweiten Parameter P (2) sind hierbei beispielsweise als Hold, Suspend, Generic notifications, Redirection number, Redirection number restriction, Conference treatment indicator (backward), Connected number oder als Additional connected number ausgebildet.

Optional erfolgt bei jedem Empfang eines zweiten Parameters P (2) eine semantische Prüfung der bereits im Speicher S der zweiten Call Segment Steuerung CSP (2) zwischengespeicherten Parameter P (2). Wird z.B. nach dem Parameter Hold ein Parameter Retrieve oder nach dem Parameter Suspend ein Parameter Resume empfangen, werden jeweils beide Parameter gelöscht.

Spätestens nach erfolgreicher Authentifizierung des zweiten Teilnehmers B werden die beiden Call Segmente CS (1), CS (2) zusammengeschaltet und die in der zweiten Call Segment Steuerung CSP (2) zwischengespeicherten zweiten Parameter P (2) an die erste Call Segment Steurung CSP (1) und von dieser meist zum ersten Teilnehmer A weitergeleitet. Nach der Zusammenschaltung ist zwischen den beiden Teilnehmer A und B die Verbindung V (3) eingerichtet.

Die Erfindung entfaltet in dem Intelligenten Netz IN somit besonders schöne Vorteil, insbesondere bei Anwendung des Connection View Model. Sie ist jedoch in jedem beliebigen Kommunikationsnetz anwendbar, in dem eine erfindungsgemäße Übermittlung von dienstrelevanten Informationen P zwischen Verbindungs-Steuerungen VS erforderlich ist.

## Patentansprüche

1. Verfahren zur Übermittlung von dienstrelevanten Informationen (P) zwischen zumindest zwei unterschiedlichen - insbesondere verteilt realisierten - Verbindungssteuerungen (VS), mit folgenden Schritten:
- von jeder Verbindungssteuerung wird eine ihr eindeutig zugeordnete Verbindung gesteuert,
- die dienstrelevanten Informationen werden direkt zwischen den Verbindungssteuerungen übermittelt.

2. Verfahren nach Anspruch 1,
**dadurch gekennzeichnet,**
**dass** zumindest Teile der dienstrelevanten Informationen (P) vor der Übermittlung an eine empfangende Verbindungs-Steuerung (VS) in einer sendenden Verbindungs-Steuerung (VS) zwischengespeichert werden.

3. Verfahren nach Anspruch 2,
**dadurch gekennzeichnet,**
**dass** die zwischengespeicherten dienstrelevanten Informationen (P) beim Eintreffen einer weiteren dienstrelevanten Information (P) semantisch geprüft und gegebenenfalls gelöscht werden.

4. Verfahren nach Anspruch 3,
**dadurch gekennzeichnet,**
**dass** zumindest diejenigen zwischengespeicherten dienstrelevanten Informationen (P) gelöscht werden, die zu der weiteren dienstrelevanten Information (P) im Widerspruch stehen und/oder durch diese bedeutungslos werden.

5. Verfahren nach einem der Ansprüche 2 bis 4,
**dadurch gekennzeichnet,**
**dass** in der sendenden Verbindungs-Steuerung (VS) die dienstrelevanten Informationen (P) zumindest bis zur Erzeugung der empfangenden Verbindungs-Steuerung (VS) zwischengespeichert werden.

6. Verfahren nach einem der Ansprüche 2 bis 5,
**dadurch gekennzeichnet,**
**dass** von der sendenden Verbindungs-Steuerung (VS) die dienstrelevanten Informationen (P) spätestens nach Durchführung eines Dienstes übermittelt werden, der mit Hilfe der der empfangenden Verbindungs-Steuerung (VS) zugeordneten Verbindung (V) bewirkt werden soll.

7. Verfahren nach einem der vorstehenden Ansprüche,
**dadurch gekennzeichnet,**
**dass** bei Koordination der Verbindungs-Steuerungen (VS) durch zumindest eine in einem übergeordneten Service Control Point (SCP) realisierten Koordinationsfunktion (K) von dieser die übermittelten dienstrelevanten Informationen (P) jederzeit verändert werden können.

8. Verfahren nach einem der vorstehenden Ansprüche,
**dadurch gekennzeichnet,**
**dass** die Übermittlung der dienstrelevanten Informationen (P) zwischen den Verbindungs-Steuerungen (VS) jeweils innerhalb einer Vermittlungseinrichtung (SSP) erfolgt.

9. Verfahren nach einem der vorstehenden Ansprüche,
**dadurch gekennzeichnet,**
**dass** die gesteuerten Verbindungen (V) als Call Segmente (CS) ausgebildet sind, die während der Nutzung eines Dienstes eines Intelligenten Netzes (IN) zumindest zeitweise aufgebaut werden.

10. Erzeugnis - insbesondere Verbindungssteuerung (VS) oder Intelligentes Netz (IN) -, umfassend Mittel, die zur Durchführung aller Schritte eines Verfahrens nach einem der vorstehenden Verfahrensansprüche eingerichtet sind.

## Claims

1. Method for transmitting service-related information (P) between at least two different - particularly separately implemented - connection controllers (VS), having the following steps:
- each connection controller controls a connection unambiguously assigned to it,
- the service-related information is transmitted directly between the connection controllers.

2. Method according to Claim 1, **characterized in that** at least parts of the service-related information (P) are temporarily stored in a transmitting connection controller (VS) before they are transmitted to a receiving connection controller (VS).

3. Method according to Claim 2, **characterized in that** the temporarily stored service-related information (P) is semantically checked and, if necessary, deleted when further service-related information (P) arrives.

4. Method according to Claim 3, **characterized in that** at least those temporarily stored service-related information items (P) are deleted which contradict the further service-related information (P) and/or become meaningless as a result of that information.

5. Method according to one of Claims 2 to 4, **characterized in that** the service-related information (P) is temporarily stored in the transmitting connection controller (VS) at least until the receiving connection controller (VS) has been generated.

6. Method according to one of Claims 2 to 5, **characterized in that** the transmitting connection controller (VS) transmits the service-related information (P) at the latest after a service has been performed which is to be effected with the aid of the connection (V) associated with the receiving connection controller (VS).

7. Method according to one of the preceding claims, **characterized in that** during the coordination of the connection controllers (VS) by at least one coordination function (K) implemented in a higher-level service control point (SCP), this coordination function can change the transmitted service-related information (P) at any time.

8. Method according to one of the preceding claims, **characterized in that** the service-related information (P) is transmitted between the connection controllers (VS) in each case within a switching facility (SSP).

9. Method according to one of the preceding claims, **characterized in that** the controlled connections (V) are constructed as call segments (CS) which are set up at least from time to time during the utilization of a service of an intelligent network (IN).

10. Product - particularly connection controller (VS) or intelligent network (IN) - comprising means which are set up for carrying out all the steps of a method according to one of the preceding method claims.

## Revendications

1. Procédé pour transmettre des informations (P), relatives à un service, entre au moins deux commandes de connexion (VS) différentes - notamment réalisées de manière distribuée -, comprenant les étapes suivantes :
- chaque commande de connexion commande une connexion qui lui est attribuée de manière univoque,
- les informations relatives à un service sont transmises directement entre les commandes de connexion.

2. Procédé selon la revendication 1,
**caractérisé en ce**
**qu'**au moins des parties des informations (P) relatives à un service sont mémorisées temporairement dans une commande de connexion (VS) émettrice, avant la transmission à une commande de connexion (VS) réceptrice.

3. Procédé selon la revendication 2,
**caractérisé en ce**
**que** les informations (P) relatives à un service, mémorisées temporairement, sont vérifiées du point de vue sémantique à l'arrivée d'une autre information (P) relative à un service et qu'elles sont supprimées, le cas échéant.

4. Procédé selon la revendication 3,
**caractérisé en ce**
**qu'**au moins les informations (P) relatives à un service, mémorisées temporairement, qui sont en contradiction avec l'autre information (P) relative à un service et/ou deviennent insignifiantes en raison de celle-ci, sont supprimées.

5. Procédé selon l'une quelconque des revendications 2 à 4,
**caractérisé en ce**
**que** les informations (P) relatives à un service sont mémorisées temporairement dans la commande de connexion (VS) émettrice, au moins jusqu'à la création de la commande de connexion (VS) réceptrice.

6. Procédé selon l'une quelconque des revendications 2 à 5,
**caractérisé en ce**
**que** les informations (P) relatives à un service sont transmises par la commande de connexion (VS) émettrice au plus tard après l'exécution d'un service qui doit être obtenu à l'aide de la connexion attribuée (V) à la commande de connexion (VS) réceptrice.

7. Procédé selon l'une quelconque des revendications précédentes,
**caractérisé en ce**
**que** lors de la coordination des commandes de connexion (VS) au moyen d'au moins une fonction de coordination (K) réalisée dans un Service Control Point (SCP) supérieur, les informations (P) transmises, relatives à un service, peuvent être modifiées à tout moment par cette fonction de coordination.

8. Procédé selon l'une quelconque des revendications précédentes,
**caractérisé en ce**
**que** la transmission des informations (P) relatives à un service est réalisée entre des commandes de connexion (VS) respectivement dans un dispositif de commutation (SSP).

9. Procédé selon l'une quelconque des revendications précédentes,
**caractérisé en ce que** les connexions commandées (V) sont exécutées comme des Call Segments (CS) qui sont établis, au moins temporairement, pendant l'exploitation d'un service d'un réseau intelligent (IN).

10. Produit - notamment commande de connexion (VS) ou réseau intelligent (IN) - comprenant des moyens qui sont configurés pour la réalisation de toutes les étapes d'un procédé selon l'une quelconque des revendications de procédé précédentes.
